# EUROPEAN PATENT APPLICATION

(11) **EP 2 093 933 A1**
(43) Date of publication of application: **26.08.2009**
(21) Application number: 08748574.4
(22) Date of filing: 15.05.2008
(51) Int. Cl.: H04L 12/18

(54) **A METHOD, SYSTEM AND DEVICE FOR PERFORMING A STORING PROCESS AND INQUIRING ON SESSIONS HISTORY RECORDS**

(30) Priority: 29.11.2007 CN 200710195808
(71) Applicant: Huawei Technologies Co., Ltd., Longgang District Shenzhen Guangdong 518129 (CN)
(72) Inventor: JIA, Jiangtao, Shenzhen Guangdong 518129 (CN); WANG, Hao, Shenzhen Guangdong 518129 (CN); DENG, Rong, Shenzhen Guangdong 518129 (CN)
(74) Representative: Kreuz, Georg Maria
(86) International application number: PCT/CN2008/070968
(87) International publication number: WO 2009/070989

(57) **Abstract**

The present invention discloses a method, system and apparatus for storing and querying session history records. The method for storing session history records includes: receiving a request from the first server at the user side; judging whether the request carries a storage indication; if the request carries a storage indication, judging whether to store the session history records to be saved according to the storage policy. In the embodiments of the present invention, the storing of the session history records is managed uniformly, and the history record information of a session is stored only in the corresponding storage apparatus at the secondary server side rather than being stored in the network storage apparatus at each first server side, thus overcoming the defects of the prior art, namely, waste of network storage space and redundancy of stored information.

## Description

### Technical Field

The present invention relates to communication technologies, and in particular, to a method, system and apparatus for storing session history records.

### Background

The Open Mobile Alliance (OMA) is an international organization for formulating mobile communication system standards, for example, researching and standardizing Instant Messaging (IM) and Converged IP Messaging (CPM) which are based on the Session Initiation Protocol (SIP). Generally, users have their own network storage, which is deployed at the network side of the messaging service system. The contents such as user messages and session history records are stored in the network storage, thus facilitating users to access the session history records. Meanwhile, the network storage is capable of managing user rights to access stored contents.

In the conventional art, the messaging service system stores the history records of user sessions to a network storage device, where the history records of user sessions include text messages, videos information and audios information, thus facilitating users to query and manage the communication history information subsequently. In a one-to-one session, user A and user B of a session choose to store the session records into their own network storage in the session process. In this case, the network storage at user A stores the session history of both user A and user B, and the network storage at user B also stores the session history of both user A and user B. The stored information contents are the same.

Likewise, in a group session, if the session records need to be retained, each user in the group session stores the session history related to the group session into their own network storage, and the contents of the retained session history records are the same. A session is created between the user and the server. The participating server interacts with the network storage to record the session contents, the participating server sends a message to the controlling server, and the controlling server sends the message to the destination.

In the process of research and practice, the inventor finds that: in the session processing in the conventional art, the user-related participating server stores the history records into the relevant network storage apparatus. In this way, for a session joined by two users, the same session history records are stored at the network storage apparatus of the first user side and the second user side (the primary network storage and the secondary network storage) in the session process, which leads to waste of storage resources. Moreover, for the session history of the same session, the session information on all participating network storages is the same, which leads to redundancy of information stored in the network. Especially, in a group session, the foregoing technical defects are more serious.

### Summary

The embodiments of the present invention provide a method, system and apparatus for storing and querying session history records store the history records of the same session in one network storage apparatus, thus overcoming the technical defects in the conventional art, that is, the network storage space is wasted and stored information is redundant because all parties of a session record the session history information in the network storage space.

An embodiment of the present invention proposes a method for storing session history records, including:
receiving a request from a first server at the user side;
judging whether the request carries a storage indication; and
if the request carries a storage indication, judging whether to store session history records according to a storage policy.

An embodiment of the present invention also proposes a method for querying session history records, including:
receiving query information sent by a user, where the query information carries a storage address of a session history record to be queried by the user and an identifier of the user;
sending a query request to a secondary server, where the query request carries the query information; and
receiving a query result returned by the secondary server, and sending the query result to the user.

A method for querying session history records according to an embodiment of the present invention includes:
sending query information to a first server, where the query information carries a storage address of a session history record to be queried by a User Equipment (UE) and an identifier of the UE; and
receiving a query result returned by a secondary server through the first server.

A system for storing session history records according to an embodiment of the present invention includes a secondary server and at least one first server, wherein:
the first server is adapted to decide whether to generate a request that carries a storage indication according to the indication of a user or a policy file on the first server, where the storage indication indicates that the first server needs to invite or establish a storage role to join a session, and send the request to the secondary server; and
the secondary server is adapted to judge whether the request carries a storage indication, and if the request carries a storage indication, judge whether to store a session history record to be saved according to a storage policy.

A participating server provided in an embodiment of the present invention includes a policy file storing module, a judging module, and a session joining module, wherein:
the policy file storing module is adapted to store policy files;
the judging module is adapted to judge whether to store history records of a session according to a user indication or a stored policy file; and
the session joining module is adapted to: when the judging module determines that it is necessary to store history records of the session, establish a request that carries a storage indication, where the storage indication indicates that the participating server needs to invite or establish a storage role to join the session, and send the request to a controlling server.

A controlling server provided in an embodiment of the present invention includes a receiving module, an indication judging module, and a storage processing module, wherein:
the receiving module is adapted to receive a request;
the indication judging module is adapted to judge whether the received request carries a storage indication, where the storage indication indicates that a participant who sends the request wants to join a session as a storage role; and
the storage processing module is adapted to judge whether to store a session history record to be saved according to a storage policy if the indication judging module determines that the request carries a storage indication.

A storage apparatus provided in an embodiment of the present invention includes: an invitation receiving module, a storing module, and an access control module, wherein:
the invitation receiving module is adapted to receive a request sent by a controlling server, where the request is used to invite the storage apparatus to store history records of a session to be saved;
the storing module is adapted to store history records and state information of the session; and
the access control module is adapted to perform access control for the stored session history records according to the stored session state information.

A User Equipment (UE) provided in an embodiment of the present invention includes a query information sending module, and a query result receiving module, wherein:
the query information sending module is adapted to send query information to a participating server, where the query information carries a storage address of a session history record to be queried by a user and an identifier of the user; and
the query result receiving module is adapted to receive a query result returned by a controlling server through the participating server.

### Brief Description of the Drawings

Figure 1 is a flowchart of a method for storing session history records according to a first embodiment of the present invention;

Figure 2 is a flowchart of a method for storing session history records according to a second embodiment of the present invention;

Figure 3 is a flowchart of a method for storing session history records according to a third embodiment of the present invention;

Figure 4 shows a process for a user to send a BYE message actively according to an embodiment of the present invention;

Figure 5 shows a process for a controlling server to send a BYE message to a user according to an embodiment of the present invention;

Figure 6 is a flowchart of a method for storing session history records according to a fourth embodiment of the present invention;

Figure 7 is a flowchart of a method for storing session history records according to a fifth embodiment of the present invention;

Figure 8 is a flowchart of a method for querying session history records according to a sixth embodiment of the present invention; and

Figure 9 shows a structure of a system for storing session history records according to a seventh embodiment of the present invention.

### Detailed Description

The embodiments of the present invention are hereinafter described in detail with reference to embodiments and accompanying drawings.

In embodiments of the present invention, the storing of session history records is managed uniformly. Therefore, a secondary server controls a third-party storage apparatus to store all history records of a session uniformly, or the secondary server controls the session history records to be stored locally, and notifies the storage address to the first server at each user side. In this way, the first server needs to store the corresponding storage address, and it is not necessary for each first server to store the session history records of the user.

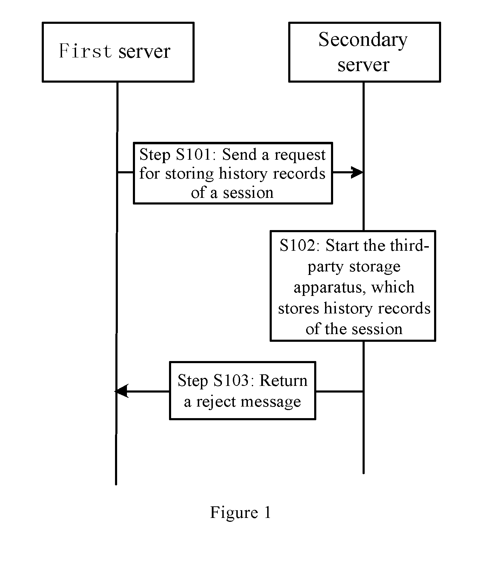

Figure 1 is a flowchart of a method for storing session history records according to the first embodiment of the present invention. The method includes the following steps:

Step S101: The first server sends to the secondary server a request for storing history records of a session. The first server may be regarded as a participating server, and the secondary server may be regarded as a controlling server. The request for storing session history records may be indicated by a user indication or decided by the first server according to its own policies.

Step S102: After the secondary server receives the request for storing session history records from the first server, the secondary server judges whether to store the session history records according to a storage policy on the secondary server. The storage policy is a policy for the secondary server to control storing of the session history records, namely, either to store all session history records uniformly or store partial session history records uniformly in view of the user attributes. If the set storage policy is to store all session history records uniformly, that is, the secondary server stores all session history records uniformly for all first servers that raise a storage request. If the set storage policy is to store partial session history records, for example, if the users of a session are categorized geographically and a session covers users in Beijing, Shanghai and Shenzhen, the secondary server may control the first servers in Beijing and Shanghai not to store the session history records, but the secondary server stores the session in place of the first servers in Beijing and Shanghai. In this way, the storage resources are saved, without wasting storage space of the network. More specifically, after receiving the request for storing the session history records from the first server, the secondary server judges whether the first server belongs to Beijing or Shanghai according to the storage policy on the secondary server. If the first server belongs to Beijing or Shanghai, the secondary server stores the session history records in place of the first server, and returns a reject message to the first server, rejecting the first server to join the session as a storage role. If the first server belongs to Shenzhen instead of Beijing and Shanghai, the secondary controller accepts the storage request of the first server, and allows the first server to join the session as a storage role and store the session history records, that is, the first server stores the session history records of the user. Through the foregoing embodiment, the secondary server stores the session history records of the users in Beijing or Shanghai uniformly, thus saving storage resources of the network. The process that the secondary server stores the session history records uniformly may be: the secondary server stores the session history records to a local directory of the secondary server; or the secondary server starts a third-party storage apparatus, and the third-party storage apparatus is responsible for storing the history records of the session.

However, categorizing users geographically is one solution of the present invention. Users may also be categorized according to the user level, and the session state information of higher-level users is stored uniformly, and higher access rights are set through a third-party storage apparatus, thus meeting the security requirements of higher-level users for storing session history records.

As a solution of the embodiment of the present invention, the third-party storage apparatus may be provided by a Value Added Service Provider (VASP), or provided in a network storage entity or a storage server. The third-party storage apparatus not only stores history records of the session, but also stores the state information of the session. The session state information includes time when the user joins the session, time when the user leaves the session, and so on. In this way, the third-party storage apparatus is able to perform control access for the stored session history records according to the session state information.

For example, if a user wants to access the history information of a session joined by the user, the third-party storage apparatus selects the accessible history time segment according to the state information of the user, that is, the user can access the session history records in the time segment from joining the session to leaving the session.

Step S103: The secondary server returns a reject message to the first server, and notifies the first server that the third-party storage apparatus stores the history records of the session, and rejects the participant (storage role) invited or established by the first server to join the session and store the history records of the session.

In the foregoing embodiment, the secondary server controls the third-party storage apparatus to store the session history records uniformly. The following embodiment of the present invention takes the controlling server and the participating server as an example. It should be noted that the embodiment exemplified by the controlling server and the participating server is a preferred embodiment of the present invention, but the present invention is not limited to the application scenario of a controlling server and a participating server.

The technical solution in an embodiment of the present invention embodies the following merits: the storing of the session history records is managed uniformly, and the history record information of a session is stored in the corresponding storage apparatus at the secondary server (for example, controlling server) side, or stored in the secondary server rather than being stored in the network storage apparatus at each participating server side, thus overcoming the defects of the prior art, namely, waste of network storage space and redundancy of stored information. The utilization of the storage space is improved, the information redundancy is reduced, and the network resources are saved.

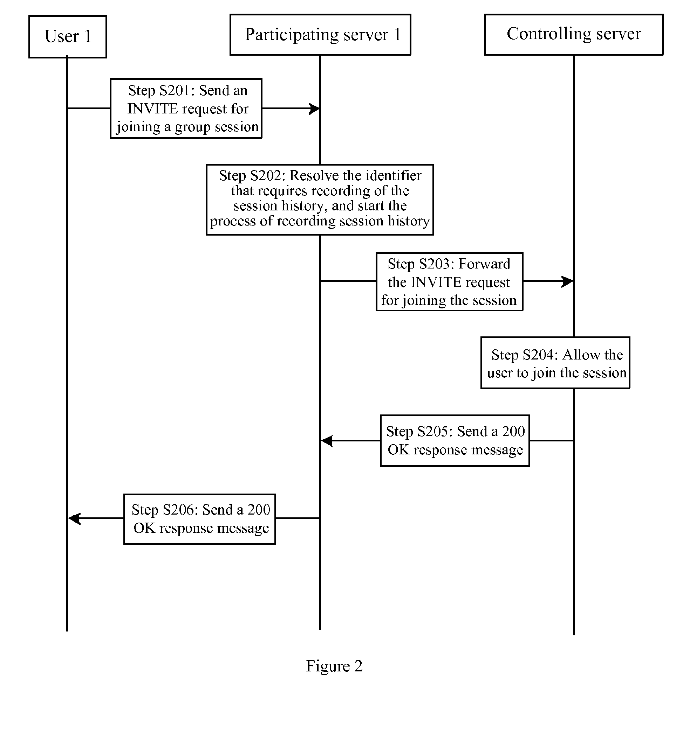

Figure 2 is a flowchart of a method for storing session history records according to the second embodiment of the present invention, which supposes that a user joins a group session. This embodiment omits the process in which the response and signaling pass through the SIP/IP Core. The process in which the response and signaling pass through the SIP/IP Core really exists in the actual signaling flow. This embodiment includes the following steps:

Step S201: User 1 sends an INVITE request for joining a group session to a participating server 1, where the INVITE request carries an indication of recording the session history. The specific message format is as follows:

```
INVITE sip:SessionABC@example.com SIP/2.0
Via: SIP/2.0/TCP user1.example.com;branch=z9hG4bKhjhs8ass83
Max-Forwards: 70
To: sip:sessionABC@example.com
From: user1 <sip:user1@example.com>;tag=32331
Call-ID: d432fa84b4c76e66710
CSeq: 1 INVITE
Contact: <sip:user1@client.example.com>
Accept: application/sdp, message/sipfrag
Require: record-history
Content-Type: multipart/mixed;boundary="boundary1"
Content-Length: ...

--boundaryl
Content-type: application/service-settings+xml
Content-disposition: record-allowed

<?xml version="1.0" encoding="UTF-8"?>

<service-setting sxmlns="urn:oma:params:xml:ns: service-settings" >
<entity id="do39s8zksn2d98x">
   <networkstorage_allowed>TRUE</networkstorage_allowed>
</entity>
</service-settings>

--boundaryl
Content-Type: application/sdp

SDP not shown
--boundaryl --
```

In the "Require" header of the foregoing INVITE request, the "record-history" identifier indicates that the user requires recording of the session history, and the message body of the INVITE request needs to carry the corresponding setting information.

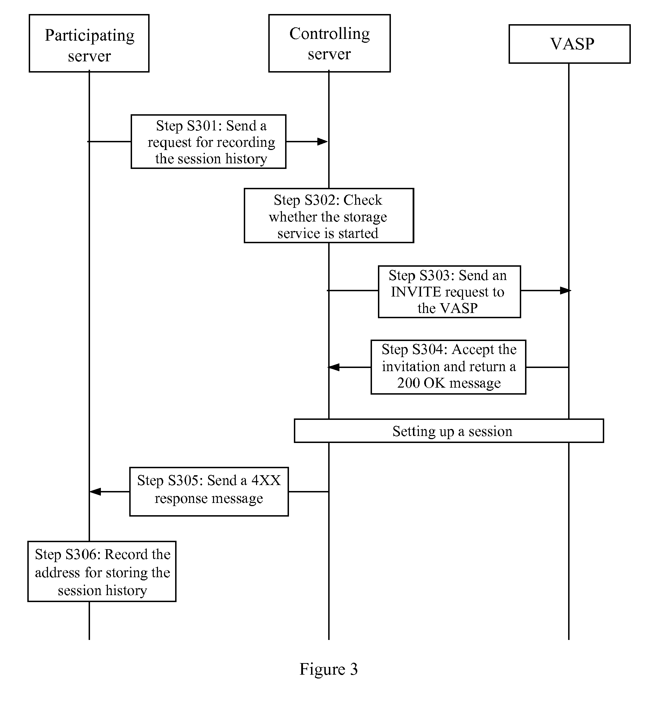

Step S202: The participating server receives the request, and checks whether the user requires recording of the session history, and starts the process of recording the session history if the user requires recording of the session history. The need of recording the session history depends on existence of the "record-history" identifier in the "Require" header and the settings carried in the INVITE request. The process that the participating server starts recording of session history is described below. As shown in Figure 3, after receiving an indication of starting recording of session history in the user request, the participating server decides whether to generate a request that carries a storage indication according to the user indication, and the participating server may also decide whether to generate a request that carries a storage indication according to the policy stored locally. The storage indication indicates that the first server needs to invite or establish a participant (storage role) for recording the session history to join the session, and sends the request for joining the session and recording the session history to the secondary server. The controlling server starts the third-party storage service. Preferably, the VASP may be invited to join the session and store the session history records. Meanwhile, the request carries the state information of the session. After the VASP joins the session, the controlling server sends a 4XX message, notifying the participating server that a VASP is already responsible for storing session history records. The response message carries the storage address of the session information. After receiving the response message, the participating server stores the storage address of the session history. This embodiment includes the following steps:

Step S301: After determining the need of recording the session history, the participating server sends a request for recording the session history to the controlling server. The request may be an INVITE request or REFER message. Supposing that the INVITE request carries the indication of storing session history, the message format is as follows:

```
INVITE sip:sessionABC@example.com SIP/2.0
Via: SIP/2.0/TCP pserver1.example.com;branch=z9hG4bKhjas83
Max-Forwards: 70
To: sip:sessionABC@example.com
From: sip:history@server1.example.com;tag=4931
Call-ID: 32fa8476e66710
CSeq: 1 INVITE
Contact: <sip:history@server1.example.com> ;+g.network-storage
Content-Type: application/sdp
Content-Length: ...
SDP not shown
```

The storage indication in the INVITE request for recording the session history may be carried in the "Contact" header. In the foregoing example, "+g.network-storage" is used to tell the controlling server that: the sender of the request, namely, the participating server, needs to join the session as a storage role to store the history records of the session. The storage indication may be carried in the "Require" header to indicate the need of starting the storage service to record the session history, for example, "Require: network-storage".

Step S302: The controlling server detects whether the storage service is started. If the storage service is not started, the process proceeds to step S303; if the storage service is started, the process proceeds to step S305.

Step S303: The controlling server sends an INVITE request to the VASP (i.e. third-party storage apparatus). The INVITE request carries a storage indication, and the request is used to invite the VASP to store session history records. The request carries session state information. The VASP stores the session state information in addition to session history records. Access control may be performed for the stored session history records according to the session state information. The message format is as follows:

```
    INVITE sip:vasp@example.com SIP/2.0
    Via: SIP/2.0/TCP server.example.com;branch=z9hG4bKhjass83
    Max-Forwards: 70
    To: sip:vasp@example.com
    From: sip: server.example.com;tag=3231
    Call-ID: 32fa8476710
    CSeq: 23 INVITE
    Contact: <sip:sessionABC@example.com > ;+g.network-storage
    Content-Type: multipart/mixed;boundary="boundary1"
    Content-Length: ...

    --boundaryl
       Content-Type: application/sdp
         SDP not shown
    -- boundary1
       Content-Type: application/session-state-info+xml

       <?xml version="1.0" encoding="UTF-8"?>
        <session-state-info
         xm1ns="urn:ietf:params:xm1:ns:session-state-info"
         entity=" sip: sessionABC@example.com"
         state="full" version=" 1">

         <session-description>
            <subject>shopping</subject>
         </conference-description>

         <session-state>
            <user-count>4</user-count>
         </session-state>

         <users>
          <user entity="sip:userl@example.com" state="full">
          <endpoint entity="sip:4kfk4j392jsu@example.com">
          <status>connected</status>
            <joining-info>
                 <when>2007-09-21T21:12:00Z</when>
            </joining-info>
          </endpoint>
         </user>

         <user entity="sip:user2@example.com" state="full">
          <endpoint entity="sip:4kfk4j392jsu@example.com;grid=433kj4j3u">
             <status>disconnected</status>

             <joining-info>
               <when>2007-09-21T20:50:00Z</when>
             </joining-info>
             <disconnection-info>
               <when>2007-09-21T21:10:00Z</when>
             </disconnection-info>

           </endpoint>
         </user>
        </users>
       </session-state-info>
    -- boundary1--
```

The content "application/session- state-info+xml" in the message header "Content-Type" indicates that the described content is session state information; the content in <users> indicates the information about the user who joins the session; the content in <user> indicates the state information related to the user, and information about the UE <endpoint> accessed by the user; the content in <joining-info> indicates time when the user joins the session; the content in < disconnection-info> indicates time when the user leaves the session, which facilitates the VASP to allow the user to access only the contents in the time segment during which the user joins the session according to the state of the user joining the session.

Step S304: The VASP accepts the invitation from the controlling server and returns a 200 OK response message. The 200 OK message carries a storage address of the session history, and is sent to the controlling server. Supposing that the address for recording session history is:
http://mailserver.example.com/storage/d908273ksjdfahjkh, the response message format is as follows:

```
    SIP/2.0 200 OK
    Via: SIP/2.0/TCP server.example.com;branch=z9hG4bKh jass83
    Max-Forwards: 70
    To: sip:vasp@example.com ; tag=39456
    From: sip:history@server1.example.com;tag=3231
    Call-ID: 32fa8476710
    CSeq: 23 INVITE
    Content-Type: application/history-record + xml
    Content-Length: ...

    <?xml version="1.0" encoding="UTF-8"?>
    <history-record xm1ns="urn:oma:xm1:history-record">
       <history date="2007-09-21" >
          <expiry>2007-10-20T21:13:00.0Z</expiry>
          <message-id>d908273ksjdfahjkh</message-id >
    <history-uri>"http://mailserver.example.com/storage/d908273ksjdfahjkh"</hist ory-uri>
       </history>
    </history-record>
```

The content "application/history-record + xml" in message head "Content-Type" indicates that the content carried in the message body is information about stored session history records; <expiry> indicates the validity period of the session history on the storage device; the content in <message-id> is the identifier of the message for recording the session history; and the content in <history-uri> indicates the location for storing the session history records.

Step S305: If the controlling server receives the 200 OK message returned from the third-party storage apparatus, it is definite that the third-party storage apparatus has started the storage service for the session, and hence the controlling server sends a 4XX response message to the participating server, telling that the VASP is responsible for storing the session history records, where the 4XX response message carries the server storage address for storing the session history. Taking the "488 Not Acceptable Here" message as an example, the message format is as follows:

```
    SIP/2.0 488 Not Acceptable Here
    Via: SIP/2.0/TCP server1.example.com;branch=z9hG4bKhjass83
    Max-Forwards: 70
    To: sessionABC@example.com ; tag=3879
    From: sip:history@serverl.example.com;tag=4931
    Call-ID: 32fa8476e66710
    CSeq: 1 INVITE
    Content-Type: application/history-record + xml
    Content-Length: ...

    <?xml version="1.0" encoding="UTF-8"?>
    <history-record xmlns="urn:oma:xml:history-record">
       <history date="2007-09-21" >
          <expiry>2007-10-20T21:13:00.0Z</expiry>
          <message-id>d908273ksjdfahjkh</message-id >
    <history-uri>"http://mailserver.example.com/storage/d908273ksjdfahjkh"</histo ry-uri>
       </history>
    </history-record>
```

Step S306: After receiving the response message, the participating server resolves the information about the address for recording the session history carried in the message, and records the information about the address for storing the session history. The stored information may be recorded on a local storage apparatus, a corresponding user network storage apparatus, or a preferences entity of the user. The stored contents include the address for recording the session history, session history ID, and expiry information, and may include relevant session state information, for example, time when the user joins the session and time when the user leaves the session. The stored message is represented below in the xml format:

```
    <?xml version="1.0" encoding="UTF-8"?>
    <history-record xmlns="urn:oma:xm1:history-record">
       <history date="2007-09-21" >
          <expiry>2007-10-20T21:13:00.0Z</expiry>
          <message-id>d908273ksjdfahjkh</message-id >
    <history-uri>"http://mailserver.example.com/storage/d908273ksjdfahjkh" </history-uri>
       </history>
    <joining-info>
             <when>2007-09-21T21:00:00Z</when>
     </joining-info>
    </history-record>
```

In the foregoing message, the value of "date" indicates the date of recording the session history; <expiry> indicates the validity period, and the record is deleted upon expiry; <message-id> is a unique identifier of the session history; the content in <history-uri> indicates the location for storing session history records, where the URI enables the user to access the session history records; and the content in <joining-info> indicates the time when the user joins the session.

In the foregoing embodiment, the user sends an INVITE request to instruct the participating server to store the session history records. Moreover, the participating server in this embodiment may decide whether to store the session history records according to its own policy file storage indication. The policy file is demonstrated below.
The file in the XML format is shown below:

```
    <?xml version="1.0" encoding="UTF-8"?>
    <cpm-settings xmlns="urn:oma:params:xml:ns:cpm:cpm-settings" >
        <entity id="do39s8zksn2d98x">
            <networkstorage_allowed>TRUE</networkstorage_allowed>
         </entity>
    </cpm-settings>
```

Steps S203-S204: The participating server forwards the INVITE request to the controlling server, and allows the user to join the session.

Steps S205-S206: The controlling server sends a 200 OK response message to the user, indicating that the user joins the session successfully.

During the session process after the user joins the session, the user may also send a re-INVITE message or INFO message, instructing the participating server to stop recording the session history. "+g.network-storage=false" is carried in the message header "Require" to instruct the participating server to stop recording the session history, or carried in the message body, using "FALSE" to indicate stop of recording the session history. The file in the XML format is as follows:

```
       <?xml version="1.0" encoding="UTF-8"?>
       <cpm-settings xmlns="urn:oma:params:xml:ns:cpm:cpm-settings" >
          <entity id="do39s8zksn2d98x">
               <networkstorage_allowed>FALSE</networkstorage_allowed>
          </entity>
       </cpm-settings>
```

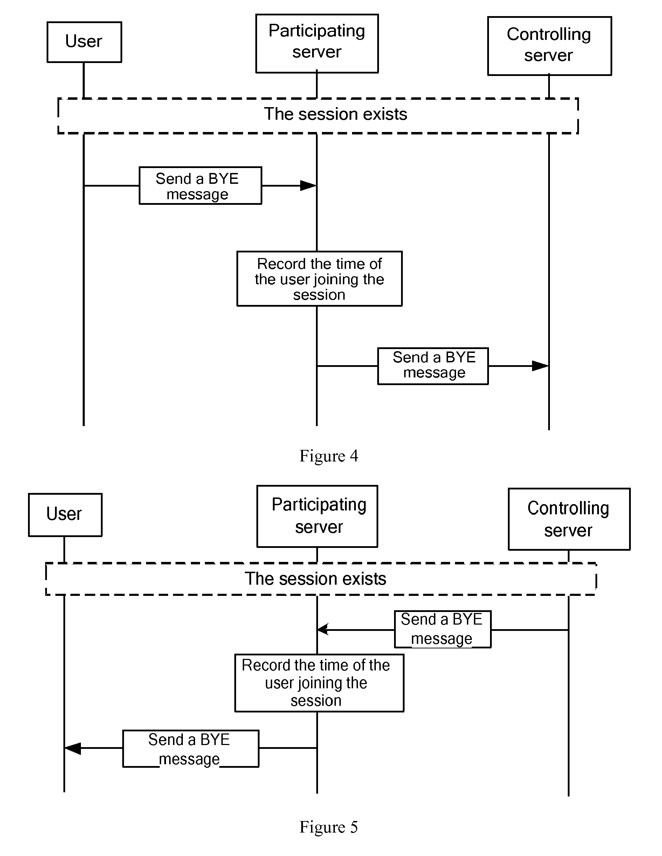

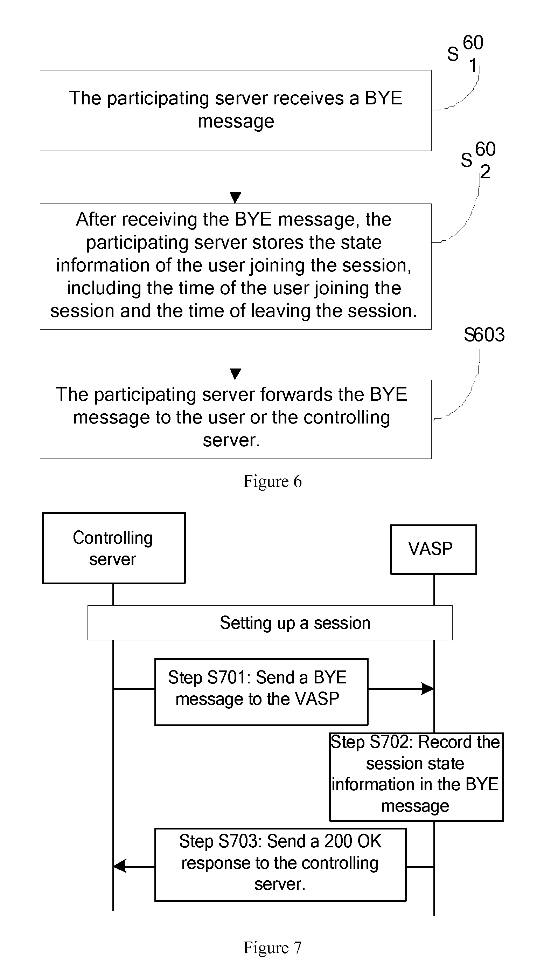

The embodiments of the present invention also disclose a storage process after the user leaves the session. Leaving a session comes in two types: the user leaves the session actively; and the controlling server notifies the user to leave the session, as shown in Figure 4 and Figure 5 respectively. Figure 4 shows the process in which the user sends a BYE message actively according to an embodiment of the present invention. In this process, the user sends a BYE (leave) message to the participating server; after receiving the BYE message, the participating server stores the state information of the user joining the session, and forwards the BYE message to the controlling server. Figure 5 shows the process in which the controlling server sends a BYE message to the user according to an embodiment of the present invention. In this process, the controlling server sends a BYE message to the participating server; after receiving the BYE message, the participating server stores the state information of the session, and forwards the BYE message to the user. In view of the foregoing two modes, the embodiment of the present invention proposes a flowchart of the method for storing session history records according to the fourth embodiment of the present invention, as shown in Figure 6. The method includes the following steps:

Step S601: The participating server receives a BYE message, which may come from the user, indicating that a participant needs to leave the session, or may come from the controlling server.

Step S602: After receiving the BYE message, the participating server stores the state information of the user joining the session, including the time when the user joins the session and the time when the user leaves the session. The participating server stores the information about the user joining the session and leaving the session together with this session history record into the directory for storing session history records. The information about the user joining the session and leaving the session may also be recorded on a local storage apparatus, a corresponding user network storage apparatus, or a preferences entity of the user. The recorded information is as follows:

```
    <?xml version="1.0" encoding="UTF-8"?>
    <history-record xmlns="urn:oma:xml:history-record">
        <history date="2007-09-21" >
            <expiry>2007-10-20T21:13:00.0Z</expiry>
            <message-id>d908273ksjdfahjkh</message-id >
    <history-uri>"http://mailserver.example.com/storage/d908273ksjdfahjkh"</history-uri>
       </history>

    <joining-info>
            <when>2007-09-21T21:00:00Z</when>
    </joining-info>
    <disconnection-info>
             <when>2007-09-21T22:00:00Z</when>
    </disconnection-info>

    </history-record>
```

The content in <disconnect-info> indicates the time of the user leaving the session. Through the time when the user stays in the session, the contents of the session history records accessible to the user can be determined.

Step S603: The participating server forwards the BYE message to the user or the controlling server. The information about the address for recording the session history may not only be recorded in the foregoing locations, but also be notified to the participating user through a message, and the user stores the information on the UE. The message body carries the address for recording the session history. Supposing that the user is notified through a message, the format is as follows:

```
    MESSAGE sip:user1@example.com SIP/2.0
    Via: SIP/2.0/TCP pserver.example.com; branch=z9hG4bK776sgke
    Max-Forwards: 70
    From: sip:pserver.example.com;tag=49583
    To: sip: user1@example.com
    Call-ID: 2316546kjy
    CSeq: 1 MESSAGE
    Content-Type: application/vnd.cmp.histroy-record-info+xm1
    Content-Length:...

     <?xml version="1.0" encoding="UTF-8"?>
    <history-record xmlns="urn:oma:xml:history-record">
            <history date="2007-09-21" >
              <expiry>2007-10-20T21:13:00.0Z</expiry>
              <message-id>d908273ksjdfahjkh</message-id >
    <history-uri>"http://mailserver.example.com/storage/d908273ksjdfahjkh"</history-uri>
    </history>
        </history-record>
```

The content "application/vnd.cmp.histroy -record- info+xml" in the message header "Content-Type" indicates that the content of the message body is the information about the history records. The message body includes the address of the history records, message identifier, validity period, and so on.

Figure 7 is a flowchart of a method for storing session history records in the fifth embodiment of the present invention. In this embodiment, after the session state information changes, for example, after a new user joins the session or an original user leaves the session, the controlling server needs to notify the VASP of the session state information. In the session process, the session state information may be carried in the message body of a re-INVITE message or INFO message to the VASP. After receiving the message, the VASP updates the session state information stored in the VASP. A concise mode proposed in an embodiment of the present invention is: upon completion of a session, the controlling server sends a BYE message to the VASP, with the session state information carried in the message. If the VASP sends a BYE message to the controlling server actively, the response message (for example, 200 OK message) sent from the controlling server to the VASP carries the session state information. Preferably, after the VASP leaves the process of storing the session history actively, the controlling server needs to notify all users in the session. Supposing that the controlling server sends a BYE message to the VASP, the process includes the following steps:

Step S701: The controlling server sends a BYE message to the VASP, indicating completion of recording the session history. The message carries the state information of the session, as shown below:

```
    BYE sip:vasp@example.com SIP/2.0
    Via: SIP/2.0/TCP server.example.com;branch=z9hG4bKhjass83
    Max-Forwards: 70
    To: sip:vasp@example.com;tag=39456
    From: sip: server.example.com;tag=3231
    Call-ID: 32fa8476710
    CSeq: 1 BYE
    Content-Type: application/session-state-info+xml
    Content-Length: ...

       <?xml version="1.0" encoding="UTF-8"?>
        <session-state-info
         xm1ns="urn:ietf:params:xm1:ns:session-state-info"
         entity=" sip: sessionABC@example.com"
         state="full" version=" 1">

         <session-description>
          <subject>shopping</subject>
         </conference-description>

         <session-state>
          <user-count>4</user-count>
         </session-state>

         <users>
          <user entity="sip:user1@example.com" state="full">
          <endpoint entity="sip:4kfk4j392jsu@example.com">
              <status>disconnected</status>
              <joining-info>
                  <when>2007-09-21T21:12:00Z</when>
             </joining-info>
            <disconnection-info>
               <when>2007-09-21T22:10:00Z</when>
            </disconnection-info>

        </endpoint>
     </user>

     <user entity="sip:user2@example.com" state="full">
     <endpoint entity="sip:4kfk4j392jsu@example.com;grid=433kj4j3u">
        <joining-info>
            <when>2007-09-21T20:50:00Z</when>
         </joining-info>
         <disconnection-info>
               <when>2007-09-21T21:10:00Z</when>
             </disconnection-info>
            </endpoint>
          </user>
         </users>
        </session-state-info>
```

The content "application/session-state- info+xml" in the message header "Content-Type" indicates that the carried content is the state information of the session, including the quantity of participants in the session, information about each participant, time when the user joins the session, namely, <joining-info>, and time when the user leaves the session, namely, <disconnection-info>.

Step S702: The VASP receives the BYE message, and records the session state information in the message, namely, records the session state information carried in the BYE message and the content indicated in "application/session-state-info+xml".

Step S703: The VASP sends a 200 OK response to the controlling server.

It should be noted that in the foregoing embodiment, a SUBSCRIBE or NOTIFY mechanism may be used to notify the VASP of the session state information. The VASP uses a SUBSCRIBE message to subscribe to the state information of the session from the controlling server. When the session state changes, the controlling server uses a NOTIFY message to notify the VASP of the session state information, and then the VASP records the session state information.

Through the method for storing session history records according to the foregoing embodiment, waste of network storage space and redundancy of stored information are avoided, the utilization of storage space is improved, and the information redundancy is reduced.

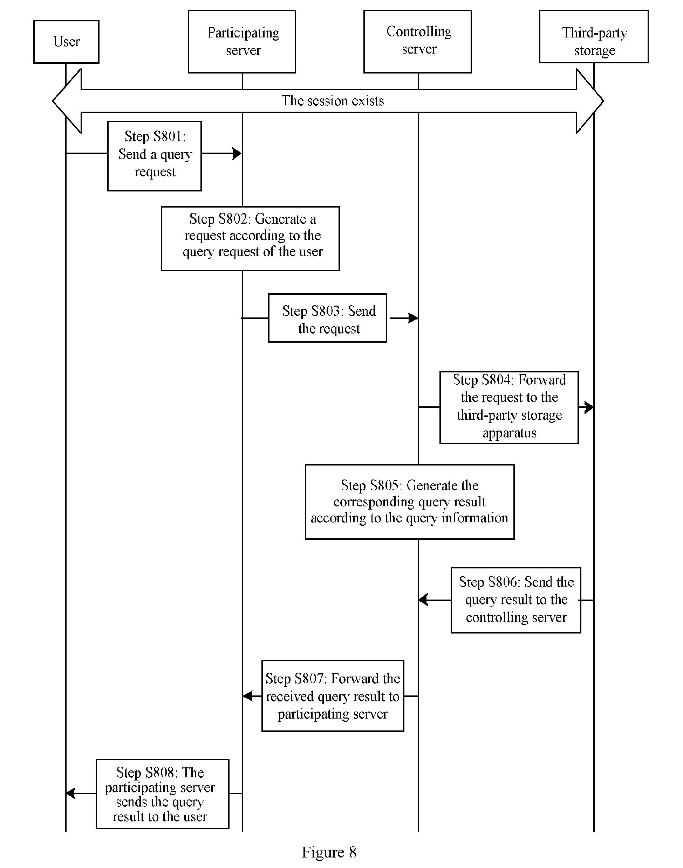

Figure 8 is a flowchart of querying session history records in the sixth embodiment of the present invention. For the session history records stored on a third-party storage, the user may carry the storage address of the session history records to be queried in a query request according to the address for storing the session history records on the UE, and access the third-party storage apparatus through the participating server and the controlling server to obtain the corresponding session history records. This embodiment supposes that a session is already created between the user and the third-party storage apparatus, and the process includes the following steps:

Step S801: The user sends a query request to the participating server, with the query information carried in the query request. The query information includes the storage address of the session history records to be queried by the user, and a user identifier such as Universal Resource Identifier (URI) of the user.

Step S802: According to the query request of the user, the participating server generates a request. The request also carries the storage address of the session history records to be queried by the user, and a user identifier such as URI of the user. The third-party storage apparatus may store no session state information. Therefore, optionally, the request may carry state information of the session joined by the user at the time, for example, time when the user joins the session, and time when the user leaves the session.

Step S803: The participating server sends a request to the controlling server.

Step S804: The controlling server forwards the request to the third-party storage apparatus.

Step S805: The third-party storage apparatus determines the session history records to be queried by the user according to the query information reported by the user, and determines the access rights of the user according to the time information in the session history records, and generates a query result. The query result is information or contents of the records accessible to the user. The session state information for determining the access rights of the user may be added by the participating server in step S802, or stored by the third-party storage apparatus. The access rights of the user are determined according to the session state information. For example, the third-party storage apparatus generates an access time segment according to the time of the user joining the session indicated in the session state information (from the time when the user joins the session to the time when the user leaves the session). Each information entry in the stored session history records has the corresponding timestamp indicative of the time of storing the information. Therefore, all the information with the corresponding timestamp in the access time segment is the record contents accessible to the user. The corresponding query result is generated according to the record contents.

Step S806: The third-party storage apparatus sends the foregoing query result to the controlling server.

Step S807: The controlling server forwards the query result to the participating server.

Step S808: The participating server sends the query result to the user.

It should be noted that in the foregoing embodiment, the user access rights are determined according to the time when the user joins the session. In the practical application, the user access rights may be determined according to the user level or other user attributes; or no access right is set for the user, that is, the user is entitled to access any stored session history record.

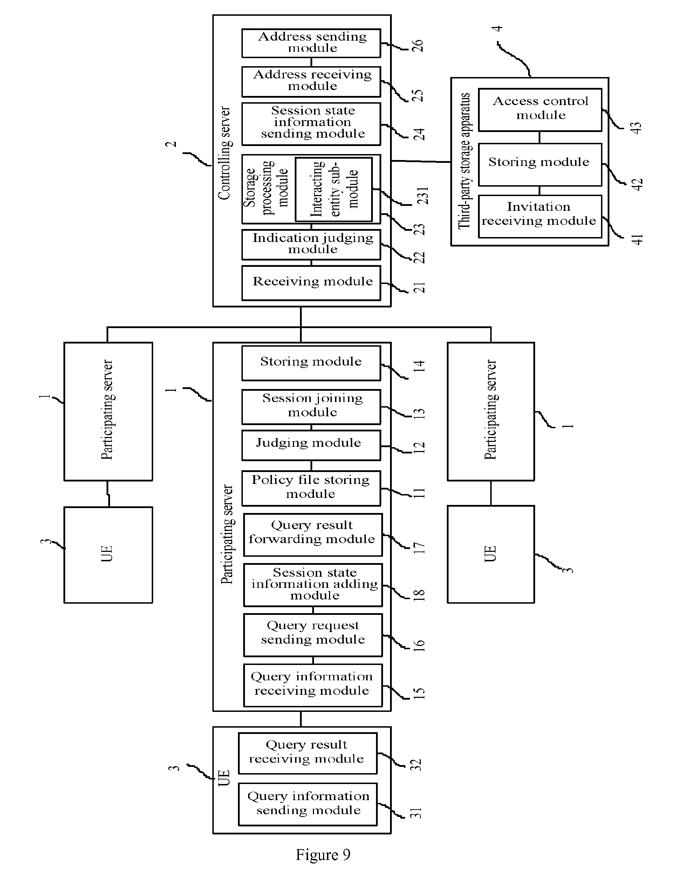

Figure 9 shows a structure of a system for storing session history records according to the seventh embodiment of the present invention. The system includes a User Equipment (UE), a first server and a secondary server. In this embodiment, the first server is a participating server 1, and the secondary server is a controlling server 2. The system includes a controlling server 2, at least one participating server 1, and a UE 3 corresponding to the participating server 1. The participating server 1 is adapted to decide whether to generate a request that carries a storage indication according to the indication of the UE 3 or the policy file on the participating server 1. The storage indication indicates that the participating server 1 needs to invite or establish a storage role to join the session, and send a request to the controlling server 2. The controlling server 2 is adapted to receive the request from the participating server 1, and judge whether the request carries a storage indication; if the request carries a storage indication, judge whether to store the history records of the session to be saved according to the storage policy; if it is necessary to store the session history records, store the history records of the session to be saved.

The system further includes a third-party storage apparatus 4. After determining that the request includes a storage indication, the controlling server 2 invites the third-party storage apparatus 4 to store the history records of the session to be saved. The third-party storage apparatus 4 is adapted to store the history records of the session to be saved after receiving the invite from the second server, and the third-party storage apparatus 4 may be a VASP, a network storage entity or a storage server.

The third-party storage apparatus 4 further stores session state information, and performs access control for the stored session history records according to the session state information, for example, determines the access rights of the user according to the time that the user joins the session or the user level, or sets no access right for the user so that the user may access any stored session history record.

The participating server 1 includes a policy file storing module 11, a judging module 12, and a session joining module 13. The policy file storing module 11 is adapted to store policy files; the judging module 12 is adapted to judge whether to store history records of the session according to the indication of the UE 3 or the stored policy file. The session joining module 13 is adapted to generate a request that carries a storage indication when the judging module 12 determines that it is necessary to store history records of the session, where the storage indication indicates that the participating server 1 needs to invite or establish a storage role to join the session, and send the request to the controlling server 2.

The participating server 1 further includes a storing module 14, adapted to store the storage address of the session history records sent by the controlling server 2 after receiving the storage address.

The participating server 1 further includes a query information receiving module 15, a query request sending module 16, and a query result forwarding module 17. The query information receiving module 15 is adapted to receive the query information sent by the UE 3, where the query information includes the storage address of the history record to be queried by the UE 3 and the identifier of the UE 3. The query request sending module 16 is adapted to send a query request to the controlling server 2, where the query request carries the received query information. The query result forwarding module 17 is adapted to receive the query result returned by the controlling server 2, and forward the query result to the UE 3.

The participating server 1 further includes a session state information adding module 18, adapted to add the session state information recorded by the participating server 1 to the query request sent by the query request sending module 16 to the controlling server 2.

The controlling server 2 includes a receiving module 21, an indication judging module 22, and a storage processing module 23. The receiving module 21 is adapted to receive a request. The indication judging module 22 is adapted to judge whether the received request carries a storage indication, where the storage indication indicates that the participant who sends the request wants to join the session as a storage role. The storage processing module 23 is adapted to judge whether it is necessary to store the session history record to be saved according to the storage policy of the controlling server 2 when the judging module 22 determines that the request carries a storage indication; and if it is necessary to store the session history record to be saved,, store the history records of the session to be saved.

The storage processing module 23 includes an interacting entity sub-module 231, adapted to: invite the third-party storage apparatus 4 to store the history records of the session to be saved when the indication judging module 22 determines that the request carries a storage indication, and interact with the third-party storage apparatus 4 in the storage process.

The controlling server 2 further includes a session state information sending module 24, adapted to send the session state information to the third-party storage apparatus 4 after the session state information changes or the third-party storage apparatus leaves the storage process.

The controlling server 2 further includes an address receiving module 25 and an address sending module 26. The address receiving module 25 is adapted to receive the storage address of the session history record sent by the third-party storage apparatus 4; and the address sending module 26 is adapted to send the storage address received by the address receiving module 25 to the participating server 1.

The third-party storage apparatus 4 includes an invitation receiving module 41, a storing module 42, and an access control module 43. The invitation receiving module 41 is adapted to receive the request sent by the controlling server 2, where the request invites the third-party storage apparatus 4 to store the history records of the session to be saved; the storing module 42 is adapted to store the session history records and the session state information; the access control module 43 is adapted to perform access control for the stored session history records according to the stored session state information.

The UE 3 includes a query information sending module 31 and a query result receiving module 32. The query information sending module 31 is adapted to send query information to the participating server 1, where the query information carries the storage address of the session history record to be queried by the user, and the user identifier. The query result receiving module 32 is adapted to receive the query result returned by the controlling server 2 through the participating server 1.

In the foregoing embodiments of the present invention, the controlling server manages the storing of session history records uniformly, and the history record information of a session is stored only in the corresponding third-party storage apparatus at the controlling server side rather than being stored in the network storage apparatus at each participating server side, thus overcoming the defects of the prior art, namely, waste of network storage space and redundancy of stored information.

Through description of the foregoing embodiments, it is thus clear to those skilled in the art that the present invention may be fully implemented through hardware by means of automatic setup of link detection packets, or fully implemented through software configuration, or partially implemented through hardware by means of automatic setup, and partially implemented through software configuration. However, the full hardware-based automatic setup mode is highly real-time, and is preferred. Based on such understandings, the technical solution of the present invention or the substantial contribution to the prior art may be embodied by software products. The software products are stored in a storage medium and incorporate instructions which instruct a computer device, for example, a PC, an engine, or a network device, to execute the method provided in the embodiments of the present invention.

It is understandable to those skilled in the art that all or part of the steps of the foregoing embodiments can be implemented by hardware following instructions of programs. The programs may be stored in a computer readable storage medium. When the programs are executed, the steps of the foregoing embodiments are executed, and the storage medium may be any medium that can store program codes such as Read-Only Memory (ROM), Random Access Memory (RAM), magnetic disk and compact disk.

Although the invention has been described through preferred embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for storing history records of a session, comprising:
receiving a request from a primary server at a user side;
judging whether the request carries a storage indication; and
if the request carries a storage indication, judging whether it is necessary to store history records of the session to be saved according to a storage policy.

2. The method for storing history records of a session according to claim 1,
wherein:
the storage policy is a storage control policy of a secondary server for the history records of the session, and the storage policy decides whether to store all or part of the history records of the session uniformly.

3. The method for storing history records of a session according to claim 1,
wherein the process of storing the history records of the session to be saved comprises:
inviting a third-party storage apparatus to store the history records of the session to be saved.

4. The method for storing history records of a session according to claim 3,
wherein after the third-party storage apparatus is invited to store the history records of the session to be saved, the method further comprises:
by the third-party storage apparatus, storing history records and state information of the session, and performing access control for the stored history records of the session according to the state information of the session.

5. The method for storing history records of a session according to claim 1,
wherein before receiving the request from the primary server at the user side, the method further comprises:
deciding, by the primary server, whether it is necessary to generate an INVITE request or a request for joining the session as a storage role according to a user indication or a policy file on the primary server, where the request for joining the session carries a storage indication of joining the session as a storage role.

6. The method for storing history records of a session according to claim 3,
wherein after the third-party storage apparatus is invited to store the history records of the session to be saved, the method further comprises:
receiving a storage address for storing the history records of the session from the third-party storage apparatus.

7. The method for storing history records of a session according to claim 6,
wherein after receiving the storage address for storing the history records of the session from the third-party storage apparatus, the method further comprises:
sending the received storage address for storing the history records of the session to the primary server; and
storing, by the primary server, the storage address to a local directory, or a network storage apparatus at the primary server side, or a preferences entity of the user.

8. The method for storing history records of a session according to claim 7,
wherein after the primary server stores the storage address, the method further comprises: sending, by the primary server, the storage address to the user.

9. The method for storing history records of a session according to claim 1, further comprising:
recording, by the primary server after the user leaves the session, state information of the user joining the session to a local directory, or a network storage apparatus at the primary server side, or a preferences entity of the user.

10. The method for storing history records of a session according to claim 3, further comprising:
sending, after detecting change of state information of the session, the changed state information of the session to the third-party storage apparatus.

11. The method for storing history records of a session according to claim 3, further comprising:
sending the state information of the session to the third-party storage apparatus after receiving a leave message from the third-party storage apparatus, or
when sending a leave message to the third-party storage apparatus, sending the session state information to the third-party storage apparatus..

12. The method for storing history records of a session according to claim 11,
wherein after receiving the leave message from the third-party storage apparatus, the method further comprises:
notifying each user in the session of the leaving of the third-party storage apparatus.

13. The method for storing history records of a session according to claim 1,
wherein after storing the history records of the session to be saved, the method further comprises:
returning a reject message to the primary server to reject the request for joining the session as a storage role from the primary server.

14. The method for storing history records of a session according to any of claims 1-13, wherein the method is based on a Session Initiation Protocol (SIP).

15. The method for storing history records of a session according to any of claims 3-13, wherein:
the primary server is a participating server, the secondary server is a controlling server, and the third-party storage apparatus is a Value Added Service Provider (VASP) or a network storage entity or a storage server.

16. A method for querying history records of a session, comprising:
receiving query information sent by a user, wherein the query information carries a storage address of a session history record to be queried by the user and an identifier of the user;
sending a query request to a secondary server, wherein the query request carries the query information; and
receiving a query result returned by the secondary sever, and sending the query result to the user.

17. The method for querying history records of a session according to claim 16,
wherein the query result is obtained through the following steps:
sending, by the secondary server, the query information to a third-party storage apparatus;
determining, by the third-party storage apparatus, the session history record to be queried by the user according to the storage address; and
determining, by the third-party storage apparatus, a content accessible to the user in the history records of the session according to state information of the session,
wherein the content accessible to the user is the query result.

18. The method for querying history records of a session according to claim 16,
wherein:
the state information of the session is stored by the third-party storage apparatus; or
the state information of the session is reported to the third-party storage apparatus through the secondary server.

19. The method for querying history records of a session according to claim 17 or claim 18, wherein:
the primary server is a participating server, the secondary server is a controlling server, and the third-party storage apparatus is a Value Added Service Provider (VASP) or a network storage entity or a storage server.

20. A method for querying history records of a session, comprising:
sending query information to a primary server, wherein the query information carries a storage address of a session history record to be queried by a User Equipment (UE) and an identifier of the UE; and
receiving a query result returned by a secondary server through the primary server.

21. The method for querying history records of a session according to claim 20,
wherein the query result is obtained through the following steps:
sending, by the primary server, the query information to a third-party storage apparatus through the secondary server;
determining, by the third-party storage apparatus, the session history record to be queried by the UE according to the storage address; and
determining, by the third-party storage apparatus, a content accessible to the UE in the history records of the session according to state information of the session, where the content accessible to the UE is the query result.

22. The method for querying history records of a session according to claim 21,
wherein:
the state information of the session is stored by the third-party storage apparatus; or
the state information of the session is reported by the primary server that records the state information of the session to the third-party storage apparatus through the secondary server.

23. A system for storing history records of a session, comprising a secondary server and at least one primary server, wherein:
the primary server is adapted to decide whether to generate a request that carries a storage indication according to an indication of a user or a policy file on the primary server, where the storage indication indicates that the primary server needs to invite or generate a storage role to join the session, and sends the request to the secondary server; and
the secondary server is adapted to: receive the request from the primary server, judge whether the request carries a storage indication; if the request carries a storage indication, judge whether to store history records of the session to be saved according to a storage policy.

24. The system for storing history records of a session according to claim 23, further comprising a third-party storage apparatus, wherein:
the secondary server invites the third-party storage apparatus to store the history records of the session to be saved after determining that the request carries the storage indication; and
the third-party storage apparatus is adapted to store the history records of the session to be saved after receiving an invitation from the secondary server.

25. The system for storing history records of a session according to claim 24,
wherein:
the third-party storage apparatus stores state information of the session, and performs access control for the stored history records of the session according to the state information of the session.

26. The system for storing history records of a session according to claim 24 or claim 25, wherein:
the primary server is a participating server, the secondary server is a controlling server, and the third-party storage apparatus is a Value Added Service Provider (VASP) or a network storage entity or a storage server.

27. A participating server, comprising a policy file storing module, a judging module, and a session joining module, wherein:
the policy file storing module is adapted to store policy files;
the judging module is adapted to judge whether to store history records of a session according to a user indication or a stored policy file; and
the session joining module is adapted to: when the judging module determines that it is necessary to store history records of the session, generate a request that carries a storage indication, where the storage indication indicates that the participating server needs to invite or generate a storage role to join the session, and send the request to a controlling server.

28. The participating server according to claim 27, further comprising: a storing module, adapted to store a storage address of history records of the session after receiving the storage address from the controlling server.

29. The participating server according to claim 27, comprising a query information receiving module, a query request sending module and a query result forwarding module, wherein:
the query information receiving module is adapted to receive query information from a user, where the query information carries a storage address of a session history record to be queried by the user and an identifier of the user;
the query request sending module is adapted to send a query request to the controlling server, where the query request carries the received query information; and
the query result forwarding module is adapted to receive a query result returned by the controlling server, and forward the query result to the user.

30. The participating server according to claim 29, further comprising:
a session state information adding module, adapted to add session state information recorded by the participating server to the query request sent by the query request sending module to the controlling server.

31. A controlling server, comprising a receiving module, an indication judging module, and a storage processing module, wherein:
the receiving module is adapted to receive a request;
the indication judging module is adapted to judge whether the received request carries a storage indication, where the storage indication indicates that a participant who sends the request wants to join a session as a storage role; and
the storage processing module is adapted to judge whether to store history records of the session to be saved according to a storage policy if the indication judging module determines that the request carries a storage indication.

32. The controlling server according to claim 31, wherein:
the storage processing module comprises an interacting entity sub-module, adapted to: invite a third-party storage apparatus to store history records of the session to be saved when the indication judging module determines that the request carries a storage indication, and interact with the third-party storage apparatus in the storage process.

33. The controlling server according to claim 31, further comprising:
a session state information sending module, adapted to send state information of the session to the third-party storage apparatus after the state information of the session changes or the third-party storage apparatus leaves the storage process.

34. The controlling server according to claim 31, further comprising:
an address receiving module, adapted to receive a storage address for storing history records of the session from the third-party storage apparatus; and
an address sending module, adapted to send the storage address received by the address receiving module to a participating server.

35. A storage apparatus, comprising:
an invitation receiving module, adapted to receive a request sent by a controlling server, wherein the request invites the storage apparatus to store history records of a session to be saved;
a storing module, adapted to store history records and state information of the session; and
an access control module, adapted to perform access control for the stored history records of the session according to the stored state information of the session.

36. A User Equipment (UE), comprising:
a query information sending module, adapted to send query information to a participating server, wherein the query information carries a storage address of a session history record to be queried by a user and an identifier of the user; and
a query result receiving module, adapted to receive a query result returned by a controlling server through the participating server.

37. A computer-readable storage medium, wherein:
the computer-readable storage medium stores computer program codes which implement the following operations when executed by a computer:
receiving a request from a primary server at a user side;
judging whether the request carries a storage indication; and
if the request carries a storage indication, judging whether it is necessary to store history records of a session to be saved according to a storage policy.

38. A computer-readable storage medium, wherein:
the computer-readable storage medium stores computer program codes which implement the following operations when executed by a computer:
receiving query information sent by a user, where the query information carries a storage address of a session history record to be queried by the user and an identifier of the user;
sending a query request to a secondary server, where the query request carries the query information; and
receiving a query result returned by the secondary sever, and sending the query result to the user.

39. A computer-readable storage medium, wherein:
the computer-readable storage medium stores computer program codes which implement the following operations when executed by a computer:
sending query information to a primary server, where the query information carries a storage address of a session history record to be queried by a User Equipment (UE) and an identifier of the UE; and
receiving a query result returned by a secondary server through the primary server.
